Europäisches Patentamt

European Patent Office

Office européen des brevets

(19)

(11) **EP 0 673 128 B1**

(12) **EUROPEAN PATENT SPECIFICATION**

(45) Date of publication and mention
of the grant of the patent:
**24.10.2001 Bulletin 2001/43**

(51) Int Cl.$^7$: **H04B 10/18**

(21) Application number: **94301630.3**

(22) Date of filing: **08.03.1994**

(54) **Optical module for subcarrier multiplexed optical transmission system**

Optisches Modul für ein optisches Übertragungssystem mit Hilfsträger-Multiplex

Module optique pour système de transmission optique à sous-porteuses multiplexées

(84) Designated Contracting States:
**DE FR GB**

(43) Date of publication of application:
**20.09.1995 Bulletin 1995/38**

(73) Proprietor: **NEC CORPORATION**
**Tokyo (JP)**

(72) Inventors:
• **Shibutani, Makoto, c/o NEC Corporation**
**Tokyo (JP)**
• **Domon, Wataru, c/o NEC Corporation**
**Tokyo (JP)**

(74) Representative: **Moir, Michael Christopher et al**
**Mathys & Squire**
**100 Gray's Inn Road**
**London WC1X 8AL (GB)**

(56) References cited:
• **IEICE TRANSACTIONS ON ELECTRONICS,**
**vol.E76-C, no.2, February 1993, TOKYO JP**
**pages 287 - 292 SHIBUTANI ET AL 'Reflection**
**induced degradations in optical fibre feeder for**
**microcellular mobile radio systems'**
• **CATV SESSIONS, 1992 pages 334 - 341 POINT '1**
**GHz multichannel analogue transmission**
**through optical fibre'**
• **IEICE TRANSACTIONS ON COMMUNICATIONS,**
**vol.E76-B, no.9, September 1993, TOKYO JP**
**pages 1136 - 1144 TSUCHIYA ET AL 'Major**
**factors affecting fibre-optic transmission**
**system design for radio base stations'**

**Description**

BACKGROUND OF THE INVENTION

The present invention relates to an optical module for use in a subcarrier multiplexed (SCM) optical transmission system and capable of reducing the distortion of a signal light due to multiple reflections.

An SCM optical transmission system transmits a signal light modulated by frequency-multiplexed carriers and can send multichannel video signals and radio signals at low cost. This kind of system is, therefore, a promising application to the trunk lines of cable television (CATV) systems, mobile radio communication systems, etc. The prerequisite with such an application is that distortions due to the interference between individual carriers, e.g., intermodulation distortion, higher harmonic distortion and mixed modulation distortion be strictly suppressed.

In the SCM transmission system, when multiple reflections occur, the transmitted signal involves distortions attributable to the interference between a signal light and a multiple reflected light. Distortions due to multiple reflections are discussed in, for example, W. Domon et al "Distortion due to Optical Reflection and Dispersion in Optical Fiber System", the Institute of Electronics, Information and Communication Engineers of Japan, Technical Report, OCS 91-79.

A laser diode, photodiode or similar optical device for use in the SCM transmission system is usually arranged in an optical module. The optical module is often connected to an optical fiber transmission path by an optical connector. In this condition, it is likely that the signal suffers from distortions due to multiple reflections between the reflection point of the transmission path and the module or multiple reflections between the module and the optical connector.

IEICE Transactions on Electronics, vol E76-C, no 2, February 1993, Tokyo, Japan, p 287-292 discusses the influence of optical reflection induced noise and distortion for optical fibre feeder systems for microcellular mobile communication systems, and reports from optical transmission experiments and theoretical analysis that the reflection induced distortion decreases with an increase of the length between reflectors and therefore that distortion can be suppressed by expanding the connector spacing to more than 7 metres.

**SUMMARY OF THE INVENTION**

It is an object of the present invention to provide an optical module for an SCM optical transmission system which is capable of reducing the distortion of a signal light due to multiple reflections.

The optical module comprises a first optical transmission line and the at least one distortion-reducing optical fibre cable comprises a first optical fibre cable for receiving a light signal from a first optical fibre transmission line and a second optical fibre cable for receiving the light signal from the first optical fibre cable and transmitting the light signal to a second optical fibre transmission line.

BRIEF DESCRIPTION OF THE DRAWINGS

The above and other objects, features and advantages of the present invention will become more apparent from the following detailed description taken with the accompanying drawings in which:

FIG. 1 shows an optical module embodying the present invention; and
FIG. 2 shows an alternative embodiment of the present invention.

DESCRIPTION OF THE PREFERRED EMBODIMENTS

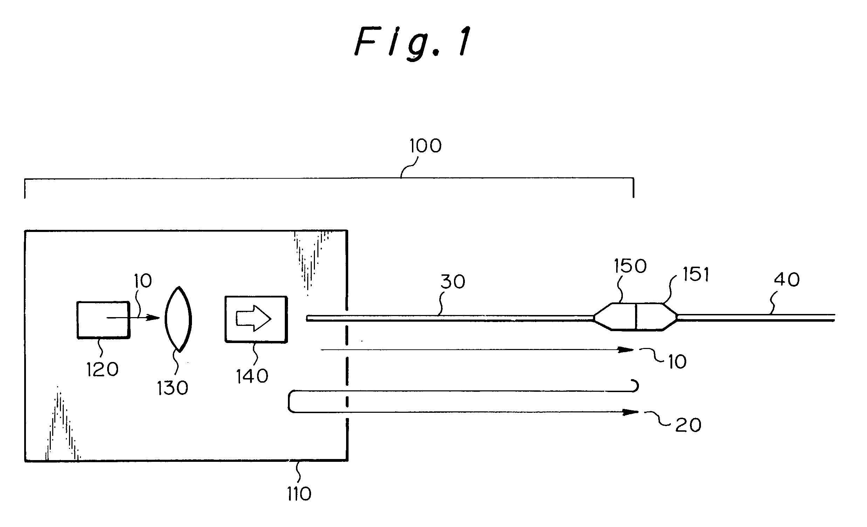

Referring to FIG. 1 of the drawings, an optical module is shown. As shown, the module is implemented as a laser diode (LD) module 100 which plays the role of a light source for an SCM transmission system. The LD module 100 has a casing 110 accommodating an LD 120, a lens 130, and an optical isolator 140. A signal light 10 issuing from the LD 120 is routed through the lens 130 and isolator 140 to a device 30 which reduces distortion due to optical reflection. The optical reflection induced distortion reducing device 30 is coupled to an optical fiber transmission path 40 via optical connectors 150 and 151. In the illustrative embodiment, the device 30 is implemented by a 10 meters long optical fiber cable. The signal light 10 is partly reflected by the connector 150, propagated through the distortion reducing device 30, reflected by the surface of the isolator 140, and again propagated through the device 30. As a result, a multiple reflected light 20 is input to the optical fiber transmission path 40.

Assuming a signal light having a linewidth of Δf, then the coherent length L(m) of the signal light is generally expressed as:

$$L = c / (2 \cdot \pi \cdot n \cdot \Delta f)$$

where *c* is the velocity of light, and *n* is the refractive index of a transmission medium (about 1.5 in the case of an optical fiber). In the embodiment, the signal light 10 is assumed to have a linewidth Δf of 5 MHz, so that the coherent length is about 6.4 meters. The 10 meters long optical fiber cable, implementing the distortion reducing device 30, was found to allow a minimum of interference to occur between the signal light 10 and the multiple reflected light 20. In the embodiment, the connector 150 has a reflectance of -25 dB while the reflectance due to the surface reflection of the isolator 130 is -35 dB. Under these conditions, the distortions of received signals were measured by use of two carriers having frequencies of 800 MHz and 801 MHz, respectively, and modulating signal lights by an optical intensity modulation index of 20 % per carrier. The measurement showed that the third-order intermodulation distortion is less than -80 dBc. By contrast, when the distortion reducing device 30 was absent, the third-order intermodulation distortion was measured to be -75 dBc. This indicates that the distortion reducing device 30 improves the distortion due to multiple reflections by more than 5 dB.

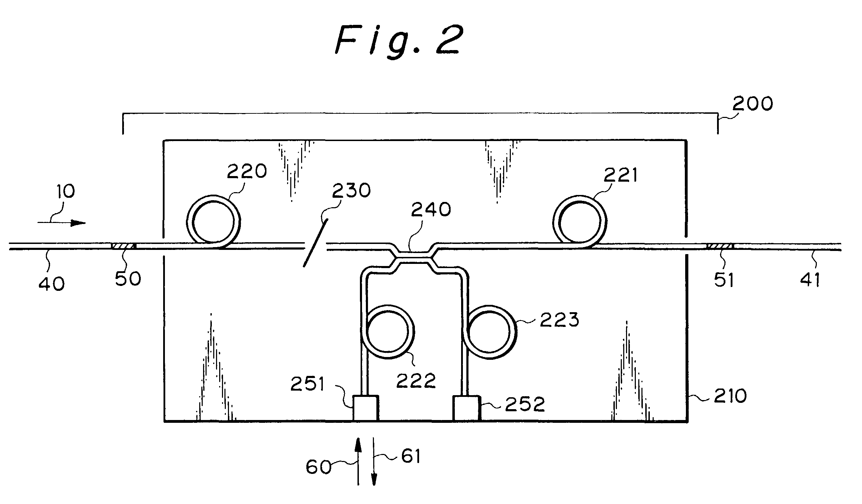

FIG. 2 shows an embodiment of the present invention which is implemented as an optical branch module 200. Briefly, the optical branch module 200 is used to locate, when an optical fiber transmission line is broken, the broken point of the line, i.e., to effect a so-called OTDR test. For the OTDR test and optical branch module, a reference may be made to. for example, N. Tomita et al "OPERATION AND MAINTENANCE SYSTEM TECHNOLOGY FOR OPTICAL SUBSCRIBER LOOP". the Institute of Electronics, Information and Communication Engineers of Japan, Technical Report, CS92-18. Specifically, the module 200 is connected to optical fiber transmission paths 40 and 41 via optical reflection induced distortion reducing devices 220 and 221, respectively. To connect the devices 220 and 221 to the transmission paths 40 and 41, respectively, optical fibers are melted by splice members 50 and 51. The module 200 includes reflection induced distortion reducing device 222 and 223, a test light intercepting filter 230, an optical fiber coupler 240, and optical connectors 251 and 252 in addition to the distortion reducing devices 220 and 221. A signal light 10 from the optical path 40 and having a wavelength of 1.31 μm is routed through the splice member 50, distortion reducing device 220, test light intercepting filter 230, optical fiber coupler 240, distortion reducing device 221 and splice member 51 to the transmission path 41. On the other hand, a test light 60 for an OTDR test, whose wavelength is 1.55 μm, is input to the optical connector 251 and then routed through the distortion reducing device 222, optical fiber coupler 240, distortion reducing device 221, and splice member 51 to the transmission path 41. A reflected test light 61 attributable to backscattering on the transmission path or reflection at a broken point thereof is output from the optical connector 251 via the splice member 51, distortion reducing device 221, optical fiber coupler 240, and distortion reducing device 222.

In the illustrative embodiment, the signal light 10 has a linewidth △f of 10 MHz, so that the coherent length thereof is about 3.2 meters. The optical fiber cables, each implementing one of the distortion reducing devices 220-223, are 10 meters long each and far longer than the coherent length of the signal light 10. In the embodiment, the splice members 50 and 51 each has a reflectance of -45 dB, the filter 230 has a reflectance of -30 dB, the optical fiber coupler 240 has a reflectance of -50 dB, and the optical connectors 251 and 252 each has a reflectance of -30 dB. Even under these conditions, hardly any distortion due to multiple reflections was observed.

In summary, it will be seen that the present invention provides an optical module for an SCM optical transmission system which reduces distortions attributable to multiple reflections.

Various modifications will become possible for those skilled in the art after receiving the teachings of the present disclosure without departing from the scope thereof.

Each feature disclosed in this specification (which term includes the claims) and/or shown in the drawings may be incorporated in the invention independently by other disclosed and/or illustrated features.

**Claims**

1.  An optical module for an SCM transmission system, comprising:

    first distortion reducing means (220) for receiving a signal light from a first optical fiber transmission line (40), said first distortion reducing means being implemented by a first optical fiber cable longer than a coherence length of said signal light; and
    first means (50) for connecting said first distortion reducing means (220) and said first optical fibre transmission line (40);
    second distortion reducing means (221) for receiving the signal light from said first distortion reducing means (220) and sending said signal light to a second optical fibre transmission line (41), said second distortion reducing means being implemented by an optical fiber cable longer than the coherent length of said signal light;
    second means (51) for connecting said second distortion reducing means (221) and said second optical fibre transmission line;
    an optical fiber coupler (240) connecting said first and second distortion reducing means (220,221); and
    a third distortion reducing means (222) for receiving a test light (60) and transferring said test light to said second optical fiber transmission line (41) via said optical fiber coupler (240), said second distortion reducing means (221), and said second means (51) for connecting.

2.  An optical module according to Claim 1, further comprising filter means (230) interposed between said first distortion reducing means (220) and said optical fiber coupler (240) for intercepting the test light.

## Patentansprüche

1. Optischer Modul für ein SCM (Unterträger-Multiplex) - Übertragungssystem, das aufweist:

   erste Verzerrungen verringernde Mittel (220) zum Empfangen von Signallicht von einer ersten optischen Übertragungsleitung (40), welche ersten Verzerrungen verringernden Mittel durch ein erstes optisches Faserkabel gebildet werden, daß enger ist als die Kohärenzlänge des Signallichtes, und

   erste Mittel (50) zum Verbinden der ersten Verzerrungen verringernden Mittel (220) und der ersten optischen Faserübertragungsleitung (40);

   zweite Verzerrungen verringernde Mittel (221) zum Empfangen des Signallichtes von den ersten Verzerrungen verringernde Mitteln (220) und zum Senden des Signallichts zu einer zweiten optischen Faserübertragungsleitung (41), welche zweiten Verzerrungen verringende Mittel durch ein optisches Faserkabel gebildet werden, das länger ist als die Kohärenzlänge des Signallichts;

   zweite Mittel (51) zum Verbinden der zweiten Verzerrungen verringernden Mittel (221) und der zweiten optischen Faserübertragungsleitung;

   ein optisches Faserverbindungselement (240), das die ersten und zweiten Verzerrungen verringernde Mittel (220, 221) verbindet; und

   dritte Verzerrungen verringernde Mittel (222) zum Empfangen von Prüflicht (60) und zum Übertragen des Prüflichts zu der zweiten optischen Faserübertragungsleitung (41) über das optische Faserverbindungselement (240), die zweiten Verzerrungen verringernden Mittel (221) und die zweiten Mittel (51) zum Verbinden.

2. Optischer Modul nach Anspruch 1, der weiter Filtermittel (230) aufweist, die zwischen den ersten Verzerrungen verringernden Mitteln (220) und dem optischen Faserverbindungselement (240) angeordnet sind, um das Prüflicht abzufangen.

## Revendications

1. Module optique pour un système de transmission à sous-porteuses multiplexées, comprenant :

   des premiers moyens de réduction de distorsion (220) pour recevoir un signal lumineux d'une première ligne de transmission à fibre optique (40), lesdits premiers moyens de réduction de distorsion étant mis en oeuvre par un premier câble à fibre optique plus long qu'une longueur de cohérence dudit signal lumineux ; et

   des premiers moyens (50) pour connecter lesdits premiers moyens de réduction de distorsion (220) et ladite première ligne de transmission à fibre optique (40) ;

   des deuxièmes moyens de réduction de distorsion (221) pour recevoir le signal lumineux provenant desdits premiers moyens de réduction de distorsion (220) et pour envoyer ledit signal lumineux à une deuxième ligne de transmission à fibre optique (41), lesdits deuxièmes moyens de réduction de distorsion étant mis en oeuvre par un câble à fibre optique plus long que la longueur de cohérence dudit signal lumineux ;

   des deuxièmes moyens (51) pour connecter lesdits deuxièmes moyens de réduction de distorsion (221) et ladite deuxième ligne de transmission à fibre optique ;

   un coupleur à fibre optique (240) connectant lesdits premiers et deuxièmes moyens de réduction de distorsion (220, 221) ; et

   des troisièmes moyens de réduction de distorsion (222) pour recevoir une lumière de test (60) et pour transférer ladite lumière de test à ladite deuxième ligne de transmission à fibre optique (41) par l'intermédiaire dudit coupleur à fibre optique (240), desdits deuxièmes moyens de réduction de distorsion (221) et desdits deuxièmes moyens (51) pour connecter.

2. Module optique selon la revendication 1, comprenant, de plus, des moyens de filtrage (230) interposés entre lesdits premiers moyens de réduction de distorsion (220) et ledit coupleur à fibre optique (240) pour intercepter la lumière de test.

# F l g . 1

EP 0 673 128 B1

Fig. 2

EP 0 673 128 B1